# EUROPÄISCHE PATENTSCHRIFT

(11) **EP 2 345 868 B1**
(45) Veröffentlichungstag und Bekanntmachung des Hinweises auf die Patenterteilung: **01.01.2014**
(21) Anmeldenummer: 10150527.9
(22) Anmeldetag: 12.01.2010
(51) Int. Cl.: G01B 3/46, G01B 7/00, G01B 7/13

(54) **Bohrungsmessgerät**
Borehole measuring device
Appareil de mesure de forage

(43) Veröffentlichungstag der Anmeldung: 20.07.2011
(73) Patentinhaber: PETER HIRT GmbH, 8606 Nänikon (CH)
(72) Erfinder: Hirt, Rolf, 8123 Ebmatingen (CH)
(74) Vertreter: Lermer, Christoph

(56) Entgegenhaltungen:
- EP-A1- 0 831 294
- EP-A1- 1 574 814
- DE-C- 884 111
- US-A- 3 225 294
- US-A- 4 030 202
- US-A- 4 382 338

## Beschreibung

### TECHNISCHES GEBIET

Die vorliegende Erfindung betrifft ein Messgerät zur Messung des Innendurchmessers einer Bohrung umfassend: eine Hülse mit wenigstens abschnittsweise zylindrischer Außenkontur; einen ersten Messkontakt zur Anlage an der Innenwand der Bohrung; einen zweiten Messkontakt zur Anlage an der Innenwand der Bohrung, wobei der zweite Messkontakt relativ zum ersten Messkontakt bewegbar angeordnet ist; und eine Messvorrichtung zur Erfassung wenigstens einer relativen Lage und/oder Lageänderung des ersten Messkontakts relativ zum zweiten Messkontakt.

### STAND DER TECHNIK

Herkömmliche Bohrungsmessgeräte weisen zwei oder mehrere Kontakte auf, die sich an eine Innenwand einer Bohrung anlegen können, um deren Innendurchmesser zu bestimmen. Dazu sind die Kontakte zueinander bewegbar angeordnet. Eine relative Änderung des Abstands wird beispielsweise mechanisch umgelenkt, um eine Messung des Bohrungsdurchmessers außerhalb der Bohrung zu ermöglichen. Ein Beispiel für ein derartiges Messgerät zeigt die Druckschrift DE3942207A1.

Nachteilig an diesen Systemen ist das Auftreten von Messfehlern, die insbesondere durch die Umlenkung eines Messwegs über Winkel auftreten. Darüber hinaus werden im Stand der Technik mechanische Schleifberührungen verwendet, durch die sich die Kontakte über einen längeren Benutzungszeitraum abnützen können. Dies führt zu weiteren Messfehlern.

So beschreibt das Dokument US 4 030 202 A eine Vorrichtung zum Messen von Innendurchmessern und umfasst einen ersten und einen zweiten Messkontakt, die jeweils relativ zueinander verschiebbar in dem Gehäuse über ein Gleitlager gelagert sind. Anhand der Verschiebung wird über ein induktives Messverfahren eine Änderung ermittelt und somit der zu messende Innendurchmesser bestimmt.

Im Dokument DE 884 111 C wird eine Induktionsmesslehre zum Messen von Innenradien bzw. Durchmessern von Rohren offenbart. Zwei Taststifte liegen dabei an den zu messenden Wänden an, wobei ein Stift verschiebbar mit diesem zum zweiten Messkontakt angeordnet ist. Der verschiebbare Stift ist zusätzlich über eine Feder im Gehäuse gelagert.

Das Dokument EP 0 831 294 A1 offenbart eine Messvorrichtung zum Messen von Innendurchmessern, die zwei Messarme umfasst, die über eine Basis miteinander verbunden sind, so dass im Grundzustand die beiden Messarme parallel zueinander positioniert sind. Zwischen den beiden Messarmen und senkrecht zu diesen ist eine induktive Messvorrichtung angeordnet, so dass bei einem Zusammendrücken bzw. Auseinanderdrücken der beiden Messarme eine entsprechende Abstandsänderung und somit ein Durchmesser bestimmt werden kann.

In der Druckschrift US 3 225 294 A wird eine Messvorrichtung zum induktiven Messen eines Innenradius beschrieben. Die Messvorrichtung umfasst zwei Messkontakte, die relativ zueinander bewegbar gelagert sind.

In dem Dokument US 4 382 338 A wird eine Vorrichtung zum Messen des Innenradius von Öffnungen offenbart. Die Messvorrichtung umfasst zwei Messarme, zwischen denen eine induktive Messvorrichtung angeordnet ist. Die induktive Messvorrichtung umfasst einerseits ein Gehäuse mit Windungen, die an einem Messarm angeordnet sind und andererseits einen Schaft mit einem Kern, der an einem anderen Messarm angeordnet ist, wobei sich der Kern innerhalb den Windungen bewegen kann.

Das EP 1 574 814 A1 offenbart ein Messgerät zum Messen von Innendurchmessern und umfasst zwei Messarme, die zueinander verbiegbar angeordnet sind. Zum Messen werden zwei Messkontakte, die an den Messarmen angeordnet sind, so gedrückt, dass sich die Messarme zueinander bewegen, wobei die Bewegung durch eine Induktionsmessvorrichtung gemessen wird.

### AUFGABE DER ERFINDUNG

Ausgehend davon besteht die Aufgabe der vorliegenden Erfindung darin, ein Messgerät zur Messung des Innendurchmessers einer Bohrung bereitzustellen, das einen geringen Messfehler und geringen Verschleiß aufweist.

### TECHNISCHE LÖSUNG

Diese Aufgabe wird gelöst durch ein Messgerät gemäß Anspruch 1. Vorteilhafte Ausführungsformen der Erfindung ergeben sich aus den Merkmalen der abhängigen Ansprüche.

Ein erfindungsgemäßes Messgerät zur Messung des Innendurchmessers einer Bohrung umfasst: eine Hülse mit wenigstens abschnittsweise zylindrischer Außenkontur; einen ersten Messkontakt zur Anlage an der Innenwand der Bohrung; einen zweiten Messkontakt zur Anlage an der Innenwand der Bohrung, wobei der zweite Messkontakt relativ zum ersten Messkontakt bewegbar angeordnet ist; und eine Messvorrichtung zur Erfassung wenigstens einer relativen Lage und/oder Lageänderung des ersten Messkontakts relativ zum zweiten Messkontakt. Die Messvorrichtung umfasst insbesondere wenigstens eine erste Messkomponente, z. B. eine Induktivität (Spule), und eine zweite Messkomponente, z. B. ein die Induktivität beeinflussendes Element (Kern), die relativ zueinander bewegbar mit dem ersten Messkontakt bzw. dem zweiten Messkontakt verbunden sind. Die Verbindung ist so ausgebildet, dass die erste Messkomponente (Induktivität) und die zweite Messkomponente (das die Induktivität beeinflussende Element) parallel zum ersten Messkontakt bzw. zum zweiten Messkontakt bewegbar sind.

Die Messvorrichtung ist als induktive Messvorrichtung ausgebildet. Die induktive Messung erfolgt mittels der Messung der Auslenkung der Induktivität relativ zum die Induktivität beeinflussenden Element (Kern).

Das erste Lager und/oder das zweite Lager sind als Radiallager (lineare Führung) ausgebildet, in denen der erste Messkontakt bzw. der zweite Messkontakt relativ zueinander bewegbar gelagert sind.

Weiterhin sind der erste Messkontakt, der zweite Messkontakt und/oder die erste Messkomponente und die zweite Messkomponente linear bewegbar angeordnet. Das Messgerät weist ein erstes Lager auf, in dem der erste Messkontakt relativ zur Hülse bewegbar gelagert ist und/oder ein zweites Lager aufweist, in dem der zweite Messkontakt relativ zur Hülse bewegbar gelagert ist. Dabei sind das erste Lager und/oder das zweite Lager als Radiallager ausgebildet, in denen der erste Messkontakt bzw. der zweite Messkontakt relativ zueinander bewegbar gelagert sind.

Um ein Verdrehen der Messkontakte um die eigene Achse, d. h. die Achse der Linearführung, zu verhindern, kann wenigstens eine Verdrehsicherung (z. B. ein Verdrehsicherungsarm) vorgesehen sein.

Insbesondere ist die Verbindung so ausgebildet, dass die erste Messkomponente und die zweite Messkomponente kollinear mit dem ersten Messkontakt bzw. dem zweiten Messkontakt bewegbar sind.

Die Verbindung kann also so ausgebildet sein, dass eine diagonale Bewegung (bezogen auf den Innendurchmesser des Bohrlochs bzw. der Außenkontur der Hülse) des ersten Messkontakts und des zweiten Messkontakts in eine diagonale Bewegung (bezogen auf den Innendurchmesser des Bohrlochs bzw. der Außenkontur der Hülse) der ersten Messkomponente relativ zur zweiten Messkomponente übertragen wird. Der erste Messkontakt und der zweite Messkontakt sind vorzugsweise in radialer oder diagonaler Richtung bezogen auf die im Schnitt kreisförmige Außenkontur der Hülse bewegbar angeordnet. Die Bewegungsrichtung ist somit linear, und die Bewegungsrichtung ist senkrecht zur zentralen Achse der Hülse ausgerichtet. Die erste Messkomponente (Induktivität/Spule) und die zweite Messkomponente (Kern) sind mit dem ersten Messkontakt bzw. dem zweiten Messkontakt verbunden. Sie bewegen sich parallel, insbesondere kollinear / auf einer Linie mit dem mit ihnen verbundenem Messkontakt.

In einem nicht-erfindungsgemäßen Beispiel kann die Verbindung so ausgebildet sein, dass die erste Messkomponente und die zweite Messkomponente auf einem Kreisbogen parallel zum ersten Messkontakt bzw. zum zweiten Messkontakt bewegbar sind. Die Ebenen der Kreise können vorzugsweise deckungsgleich sein. Die nicht lineare Bewegung der Messkontakte relativ zueinander kann durch eine entsprechende Korrekturauswertung, die die Nichtlinearitäten ausgleicht, kompensiert werden.

In dem Beispiel weist die Messvorrichtung einen Halter (Sensorhalter) und wenigstens einen mit dem Halter elastisch verbundenen Arm auf. In der Regel sind zwei Arme vorgesehen, die elastisch mit dem Halter verbunden bzw. relativ zueinander nach außen hin vorgespannt sind. Die Messkontakte sind am ersten Arm bzw. am zweiten Arm befestigt. Wird das System in eine Bohrung eingeführt, so werden die Kontakte und damit die Arme nach innen zusammen gedrückt. Im Fall einer induktiven Messvorrichtung ist beispielsweise die Induktivität am ersten Arm, das die Induktivität beeinflussende Element am zweiten Arm angeordnet. Bei einem Zusammendrücken der Arme ändert sich die Lage der Induktivität relativ zum die Induktivität beeinflussenden Element. Aufgrund einer Induktivitätsmessung kann der Abstand der Messkontakte bestimmt werden.

Die Messkontakte sind insbesondere am Umfang der Hülse angeordnet, speziell diametral gegenüberliegend an der Hülse angeordnet. Die Hülse umfasst insbesondere radiale Öffnungen, aus der die Messkontakte über die Außenkontur der Hülse hervorstehen können. Die Messvorrichtung ist so ausgebildet, dass eine Zwei-Punktmessung für Bohrungen durchgeführt wird.

Vorzugsweise sind das erste Lager und/oder das zweite Lager als erste Kugelführung bzw. als zweite Kugelführung ausgebildet. Das erste Lager und/oder das zweite Lager können Kugellager sein, wobei der erste Messkontakt bzw. der zweite Messkontakt axial relativ zum Kugellager bewegbar sind.

Das erste Lager und das zweite Lager sind vorzugsweise koaxial zueinander angeordnet.

Die erste Kugelführung und die zweite Kugelführung sind insbesondere derart ausgebildet, dass der erste Messkontakt relativ zum zweiten Messkontakt linear bewegbar ist, und der erste Messkontakt und der zweite Messkontakt relativ zur Hülse linear (diagonal) bewegbar angeordnet sind. Die mit den Messkontakten verbundene (induktive) Messvorrichtung selbst kann also schwimmend in einem Gehäuse gelagert sein. Der erste Messkontakt und der zweite Messkontakt sind somit auch relativ zur Hülse frei beweglich gelagert.

Vorzugsweise ist der erste Messkontakt und/oder der zweite Messkontakt wenigstens über eine Lagerwelle mit der ersten Messkomponente oder der zweiten Messkomponente verbunden.

Vorzugsweise kann die zweite Lagerwelle als Hohlwelle bereitgestellt sein.

Die erste Messkomponente kann eine Induktivität umfassen und/oder die zweite Messkomponente kann ein die Induktivität in Abhängigkeit ihrer relativen Lage zur ersten Messkomponente beeinflussendes Element umfassen. Die zweite Messkomponente kann beispielsweise ein Kern sein, der die Induktivität in Abhängigkeit von seiner Lage relativ zur Induktivität beeinflusst.

Um einen Kontakt zwischen dem ersten Messkontakt und dem zweiten Messkontakt mit der Innenwand der Bohrung zu bewerkstelligen, kann die Messvorrichtung wenigstens ein elastisches Element zur Erzeugung einer nach außen gerichteten Kraft auf den ersten Messkontakt und/oder den zweiten Messkontakt aufweisen. Als elastisches Element kann eine mechanische Feder vorgesehen sein. Der Begriff "elastisches Element" soll jedoch auch alle anderen bekannten Mittel umfassen, mit denen die Messkontakte auseinander gedrückt werden können, so z. B. eine elektromechanische Feder (ein Linearantrieb).

Aufgrund der Anordnung der mechanischen Führung (äußerer Käfig, innerer Käfig, äußeres Kugellager, inneres Kugellager, Hohlwelle, Welle) sowie der induktiven Elemente (Spule, Kern) auf einer Linie (bzw. kollinear / konzentrisch) ist das Abbe'sche Prinzip erfüllt. Gemäß dem Abbe'schen Prinzip wird eine besonders hohe Messgenauigkeit erreicht, wenn sämtliche Bewegungsrichtungen der Messkontakte und der Messelemente in einer Linie angeordnet sind.

### KURZE BESCHREIBUNG DER FIGUREN

Weitere Merkmale und Vorteile der Erfindung werden aus der nachfolgenden Beschreibung bevorzugter Ausführungsbeispiele anhand der beigefügten Figuren deutlich. Es zeigen:
- Figur 1: eine axiale Schnittansicht einer ersten Ausführungsform der Erfindung;
- Figur 2: eine radiale Schnittansicht der ersten Ausführungsform der Erfindung; und
- Figur 3: eine axiale Schnittansicht eines nicht-erfindungsgemäßen Beispiels.

### DETALLIERTE BESCHREIBUNG BEVORZUGTER AUSFÜHRUNGSBEISPIELE

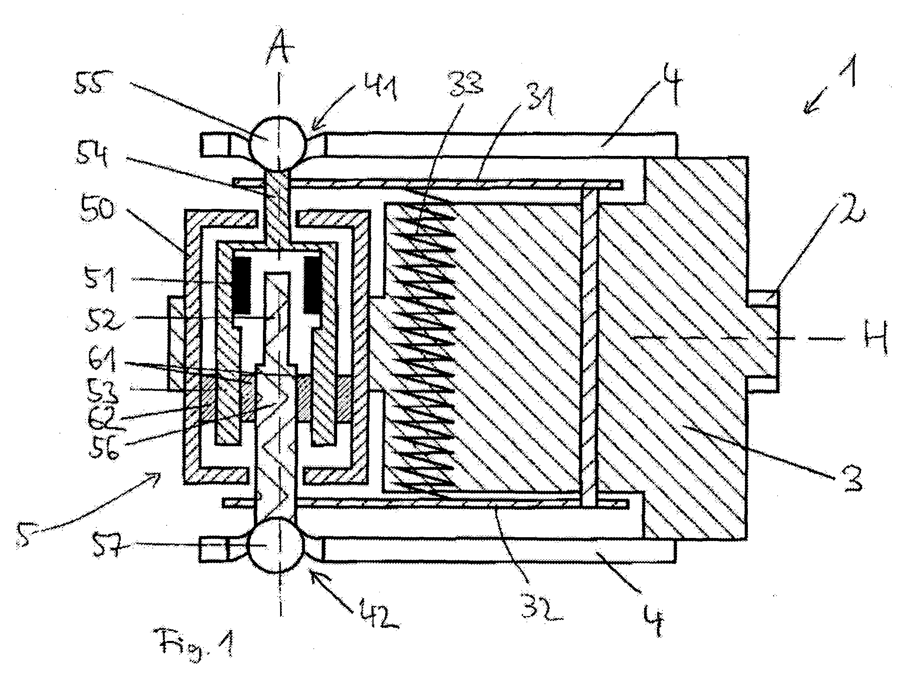

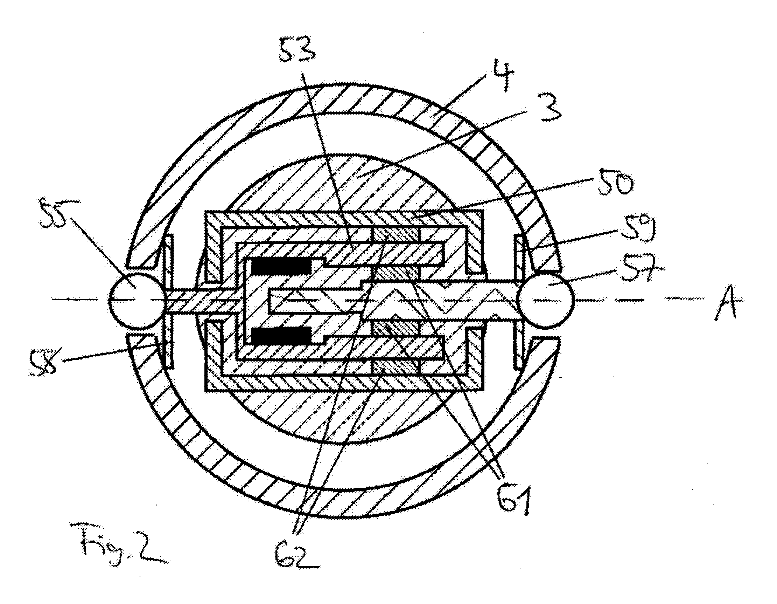

Die Figuren 1 und 2 zeigen eine erste Ausführungsform eines erfindungsgemäßen Messgeräts 1 zur Messung des Innendurchmessers einer Bohrung.

Das Messgerät 1 weist einen Halter 2 auf, an dem ein Sensorhalter 3 befestigt ist. Der Sensorhalter 3 ist mit einer Hülse 4 verbunden und wird von dieser wenigstens teilweise umschlossen. Die Hülse 4 weist eine in etwa zylindrische Außenkontur auf. Die Hülse ist in etwa rotationssymmetrisch um eine zentrale Achse H ausgebildet. Der Außendurchmesser der Hülse 4 entspricht in etwa dem Innendurchmesser der zu messenden Bohrung. Allerdings ist der Außendurchmesser der Hülse 4 etwas kleiner als der Innendurchmesser der Bohrung, so dass die Hülse 4 in die Bohrung eingeführt werden kann. Die Hülse 4 weist außerdem zwei sich diametral gegenüber liegende radiale Seitenöffnungen 41 und 42 auf.

Am Sensorhalter 3 und innerhalb der Hülse 4 ist eine Messvorrichtung 5 angeordnet. Die Messvorrichtung 5 umfasst ein starr mit dem Sensorhalter 3 verbundenes, in etwa zylindrisch ausgebildetes Gehäuse 50 auf. Die zentrale Achse A des Gehäuses 50 ist relativ zur zentralen Achse G des Gehäuses radial (d.h. senkrecht zu dieser) bzw. diagonal angeordnet.

Innerhalb des Gehäuses 50 ist ein induktives Messsystem angeordnet, das eine Spule 51 und einen Kern 52 umfasst.

Die Spule 51 ist mit einer ersten Welle 53 und, über ein Verbindungselement 54, mit einem ersten Messkontakt 55 verbunden. Das Verbindungselement 54 erstreckt sich von der Spule weg durch eine erste Öffnung im Gehäuse 50 radial relativ zur Hülse 4 bzw. axial relativ zum Gehäuse 50 nach außen. Der erste Messkontakt 55 ist an einem (äußeren) Ende des Verbindungselements 54 angeordnet und erstreckt sich durch die erste Öffnung 41 in der Hülse 4 nach außen. Der erste Messkontakt 55 ragt über die Außenkontur der Hülse 4 hinaus und steht gegenüber dieser hervor.

Der Kern 52 ist mit einer zweiten Welle 56 und einem zweiten Messkontakt 57 verbunden. Die zweite Welle 56 erstreckt sich vom Kern 52 weg durch eine zweite Öffnung im Gehäuse 50 radial relativ zur Hülse 4 bzw. axial relativ zum Gehäuse 50 nach außen. Der Kern 52 ist an einem ersten (inneren) Ende der Welle 53, der zweite Messkontakt 57 am zweiten (äußeren) Ende der zweiten Welle 53 angeordnet. Der zweite Messkontakt 55 ragt über die Außenkontur der Hülse 4 hinaus und steht gegenüber dieser hervor.

Die erste Welle 53 ist als Hohlwelle ausgebildet und umgreift die zweite Welle 56 wenigstens teilweise. Außerdem nimmt die Hohlwelle 53 das Spulensystem 51 auf, das zusammen mit dem an der zweiten Welle 56 befestigten Kern 52 das induktive Messsystem bildet.

Das System aus Kern 52, zweiter Welle 56 und zweitem Kontakt 57 ist entlang der Achse A des Gehäuses 50 mittels einer ersten Kugellagerführung axial (in Richtung A) bewegbar gelagert. In Figur 1 und 2 ist der (äußere) Käfig 61 der ersten Kugellagerführung dargestellt. Mit Hilfe von ersten Anschlägen 58 wird die maximale radiale Auslenkung des ersten Kontakts 55 begrenzt.

Das System aus Spule 51, der ersten Welle 53, dem Verbindungselement 54 und dem ersten Messkontakt 55 ist axial entlang der Achse A des Gehäuses mittels einer zweiten Kugellagerführung bewegbar gelagert. Die als Hohlwelle ausgebildete zweite Welle 53 ist innen durch einen inneren Käfig 61 und außen durch einen äußeren Käfig 62 gelagert. Mit Hilfe von zweiten Anschlägen 59 wird die maximale radiale Auslenkung des zweiten Kontakts 57 begrenzt.

Die Hülse 50, die Käfige 61, 62, die erste Welle (Hohlwelle 53), sowie die zweite Welle 56 bilden die Mechanik der Messvorrichtung. Aufgrund der doppelt überlagerten Kugelführungen 61, 62 können die Wellen 53 und 56 unabhängig in beide Richtungen bewegt werden.

Die erste Welle 53 sowie die zweite Welle 56 werden durch einen ersten Arm 31 bzw. durch einen zweiten Arm 32 aufgrund einer Federkraft (Druckfeder 33) immer leicht nach außen gedrückt. Damit liegen die Messkontakte 55, 57 zu jeder Zeit mit einer bestimmten Kraft an der Oberfläche der Innenwand der zu messenden Bohrung an. Die Feder 33 positioniert sich frei, so dass bei sämtlichen relativen Auslenkungen zwischen den Messkontakten 55, 57 unabhängig von der absoluten Position des Messgeräts 1 die Federkraft immer gleich groß ist.

Im Einsatz drücken somit die Messkontakte 55, 57 auf das Werkstück (nämlich die Innenwand der Bohrung, nicht dargestellt) und positionieren damit über die Wellen 53, 56 das Spulensystem 51 und den Kern 52 so, dass unabhängig von der absoluten Position des Gehäuses 50 innerhalb der Bohrung die Distanz zwischen den beiden Messkontakten 55, 57 gemessen wird. Die Messkontakte 55, 57 übertragen dabei die Auslenkung linear, direkt und auf einer Linie an die Spule 51 bzw. den Kern 52.

Die mechanischen Führungen umfassend das Gehäuse 50, den äußeren Käfig 62, die Hohlwelle 53, den inneren Käfig 61, und die erste Welle 56 sowie das induktive Messsystem umfassend das Spulensystem 51 und den Kern 52 sind kollinear entlang der Achse A angeordnet. Damit ist das Abbe'sche Prinzip erfüllt. Mit Hilfe der Erfindung wird verhindert, dass bei nicht kollinearen Anordnungen auftretende Messfehler vermieden werden.

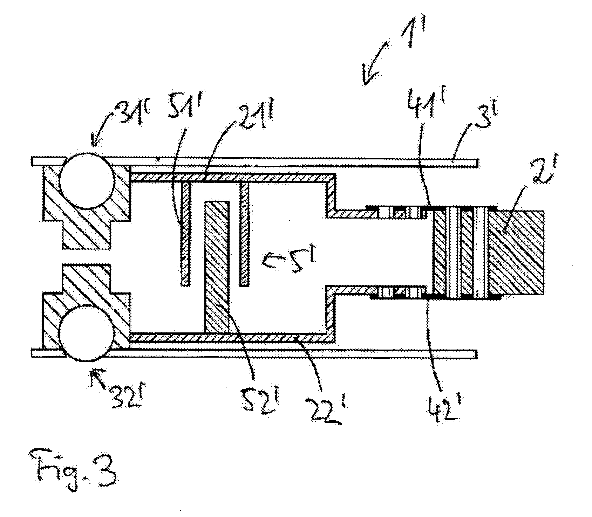

Die Figur 3 zeigt eine nicht-erfindungsgemäßes Beispiel.

Das Messsystem 1' besteht aus einem Halter 2', sowie Flankenplatten 21' und 22'. Außerdem ist eine Hülse 3' (entsprechend der Hülse 4 im vorherigen Ausführungsbeispiel) mit im Wesentlichen zylindrischer Außenkontur vorgesehen. Die Hülse 3' weist radiale Öffnungen 31' und 32' auf.

An den Flankenplatten 21' und 22' sind Messkontakte 31' bzw. 32' angeordnet. Die Flankenplatten 21' und 22' sind über Federn 41' bzw. 42' am Halter 2' befestigt. Die Federn 41' bzw. 42' sind so vorgespannt, dass die Flankenplatten 21' und 22' und damit die Messkontakte 31' und 32' nach außen gedrückt werden. Der Verbindungsabschnitt zwischen dem Halter 2' und den Flankenplatten 21' bzw. 22' ist jeweils durch Abschnitte der Federn 41' bzw. 42' gebildet. Die Verbindungsabschnitte bilden Drehpunkte für eine Rotation bzw. ein Verschwenken der Flankenplatten 21' und 22' relativ zum Halter 2'.

An den Flankenplatten 21' und 22' ist zudem eine induktive Messvorrichtung 5' angeordnet. Diese umfasst im Wesentlichen eine mit der ersten Flankenplatte 21' verbundene bzw. an dieser befestigte Spule 51' und einen mit der zweiten Flankenplatte 22' verbundenen bzw. an dieser befestigten Kern 52'. Wird das System 1' in eine zu vermessende Bohrung eingeführt, so werden die Messkontakte 31', 32' nach innen gedrückt, wodurch sich die relative Position der Flankenplatten 21' und 22' ändert. Die Lage der Spule 51' relativ zum Kern 52' kann induktiv gemessen werden. Aus dieser Lage kann die Auslenkung der Messkontakte 31', 32' bzw. deren relative Position bestimmt werden.

Auch in diesem Beispiel können sich die Messkontakte 31', 32' unabhängig voneinander bewegen. Die Auslenkung der Messkontakte 31', 32' und der Komponenten des induktiven Messsystems (Spule 51' und Kern 52'), das parallel zu den Messkontakten 31', 32' angeordnet ist, unterscheiden sich jedoch. Zum einen bewegen sich die Messkontakte 31', 32' sowie Spule 51' bzw. Kern 52' unterschiedlich weit, die sie in unterschiedlicher Höhe an den verschwenkbaren Flankenplatten 21' bzw. 22' angeordnet sind. Zum anderen beschreibt die Bewegungsrichtung eine Kurvenform statt einer linearer Bewegung, mit unterschiedlichen Bewegungsradien für die Messkontakte 31', 32' und Spule 51' bzw. Kern 52'. Die durch die nicht-lineare Bewegungsrichtung und die unterschiedliche Auslenkung entstehenden Messwerte bzw. Messfehler können durch entsprechende Nichtlinearitäten in der Auswertung ausgeglichen werden.

Der besondere Vorteil der Anordnung liegt darin, dass keine Verschleißteile zum Einsatz kommen, die über längere Zeit Messfehler verursachen.

## Patentansprüche

1. Messgerät (1) zur Messung des Innendurchmessers einer Bohrung umfassend: eine Hülse (4) mit wenigstens abschnittsweise zylindrischer Außenkontur; einen ersten Messkontakt (55) zur Anlage an der Innenwand der Bohrung; einen zweiten Messkontakt (57) zur Anlage an der Innenwand der Bohrung; eine Messvorrichtung (5) zur Erfassung wenigstens einer relativen Lage und/oder einer Lageänderung des ersten Messkontakts (55) relativ zum zweiten Messkontakt (57); und ein Gehäuse (50), wobei die Messvorrichtung als induktive Messvorrichtung ausgebildet ist, die Messvorrichtung wenigstens eine erste Messkomponente (51) und eine die erste Messkomponente (51) beeinflussende zweite Messkomponente (52) umfasst, die relativ zueinander bewegbar mit dem ersten Messkontakt (55) bzw. dem zweiten Messkontakt (57) jeweils über eine erste Lagerwelle bzw. eine zweite Lagerwelle verbunden sind, wobei die Lagerwellen derart ausgebildet sind, dass die erste Messkomponente (51) und die zweite Messkomponente (52) parallel zum ersten Messkontakt (55) bzw. zum zweiten Messkontakt (57) bewegbar sind, und der erste Messkontakt (55), der zweite Messkontakt (57) und/oder die erste Messkomponente (51) und die zweite Messkomponente (52) linear bewegbar angeordnet sind, wobei die erste Lagerwelle als Hohlwelle bereitgestellt ist, und die erste Messkomponente, die zweite Messkomponente, die erste Lagerwelle und die zweite Lagerwelle im Gehäuse (50) gelagert sind,
**dadurch gekennzeichnet, dass**
das Messgerät (1) ein erstes Lager (61) aufweist, in dem der erste Messkontakt (55) relativ zur Hülse (4) bewegbar gelagert ist, und ein zweites Lager (62) aufweist, in dem der zweite Messkontakt (57) relativ zur Hülse (4) bewegbar gelagert ist, wobei das erste Lager (61) und/oder das zweite Lager (62) als Radiallager ausgebildet sind, in denen der erste Messkontakt (55) bzw. der zweite Messkontakt (57) relativ zueinander bewegbar gelagert sind, und das erste Lager (61) zwischen dem Gehäuse (50) und der als Hohlwelle ausgebildeten ersten Lagerwelle, und das zweite Lager (62) zwischen der ersten Lagerwelle und der zweiten Lagerwelle angeordnet ist.

2. Messgerät (1) nach Anspruch 1,
**dadurch gekennzeichnet, dass**
die Verbindungen so ausgebildet sind, dass die erste Messkomponente (51) und die zweite Messkomponente (52) kollinear mit dem ersten Messkontakt (55) bzw. dem zweiten Messkontakt (57) bewegbar sind.

3. Messgerät (1) nach einem der vorhergehenden Ansprüche,
**dadurch gekennzeichnet, dass**
die Verbindungen so ausgebildet sind, dass eine diagonale Bewegung, bezogen auf den Innendurchmesser des Bohrlochs bzw. der Außenkontur der Hülse (4), des ersten Messkontakts (55) und des zweiten Messkontakts (57) in eine diagonale Bewegung, bezogen auf den Innendurchmesser des Bohrlochs bzw. der Außenkontur der Hülse(4), der ersten Messkomponente (51) relativ zu der zweiten Messkomponente (52) übertragen wird.

4. Messgerät (1; 1') nach einem der vorhergehenden Ansprüche,
**dadurch gekennzeichnet, dass**
die Messkontakte am Umfang der Hülse (4) angeordnet sind.

5. Messgerät (1) nach einem der Ansprüche 1 bis 4,
**dadurch gekennzeichnet, dass**
das erste Lager (61) und/oder das zweite Lager (62) als eine erste Kugelführung bzw. als eine zweite Kugelführung ausgebildet sind.

6. Messgerät (1) nach einem der Ansprüche 1 bis 5,
**dadurch gekennzeichnet, dass**
das erste Lager (61) und das zweite Lager (62) koaxial zueinander angeordnet sind.

7. Messgerät (1) nach einem der Ansprüche 1 bis 6,
**dadurch gekennzeichnet, dass**
das erste Lager (61) und das zweite Lager (62) derart ausgebildet sind, dass der erste Messkontakt (55) relativ zum zweiten Messkontakt (57) linear bewegbar ist, und der erste Messkontakt (55) und der zweite Messkontakt (57) relativ zur Hülse linear bewegbar angeordnet sind.

8. Messgerät (1) nach einem der vorhergehenden Ansprüche,
**dadurch gekennzeichnet, dass**
die erste Messkomponente (51,51') eine Induktivität umfasst und/oder die zweite Messkomponente (52, 52') ein die Induktivität in Abhängigkeit ihrer relativen Lage zur ersten Messkomponente (51, 51') beeinflussendes Element umfasst.

## Claims

1. Measuring unit (1) for measuring the inner diameter of a borehole, comprising:
a sleeve (4) with at least a partial cylindrical outer contour; a first measuring contact (55) for arrangement at the inner wall of the borehole; a second measuring contact (57) for arrangement at the inner wall of the borehole, a measuring unit (5) for detecting at least a relative position and/or a change of position of the first measuring contact (55) relative to the second measuring contact (57); and a housing (50), wherein the measuring unit is configured as an inductive measuring unit; the measuring unit comprises at least a first measuring component (51) and a second measuring component (52) influencing the first measuring component (51), which are movable relative to each other and connected with the first measuring contact (55) and/or the second measuring contact (57) in each case via a bearing shaft and/or a second bearing shaft, wherein the bearing shafts are so configured that the first measuring component (51) and the second measuring component (52) can be moved in parallel with the first measuring contact (55) and/or with the second measuring contact (57), and the first measuring contact (55), the second measuring contact (57) and/or the first measuring component (51) and the second measuring component (52) are arranged so as to be linearly movable, wherein the first bearing shaft is provided as a hollow shaft and the first measuring component, the second measuring component, the first bearing shaft and the second bearing shaft are mounted in the housing (50),
**characterised by** the fact that
the measuring unit (1) has a first bearing (61) in which the first measuring contact (55) is mounted so as to be movable relative to the sleeve (4), and has a second bearing (62) in which the second measuring contact (57) is mounted so as to be movable relative to the sleeve (4), wherein the first bearing (61) and/or the second bearing (62) are configured as radial bearings in which the first measuring contact (55) and/or the second measuring contact (57) are mounted so as to be movable relative to each other, and the first bearing (61) is arranged between the housing (50) and the first bearing shaft configured as a hollow shaft, and the second bearing (62) is arranged between the first bearing shaft and the second bearing shaft.

2. Measuring instrument (1) in accordance with claim 1,
**characterised by** the fact that
the connections are configured such that the first measuring component (51) and the second measuring component (52) can be moved co-linearly with the first measuring contact (55) and/or the second measuring contact (57).

3. Measuring instrument (1) in accordance with any of the previous claims
**characterised by** the fact that
the connections are configured such that a diagonal movement, expressed in terms of the inner diameter of the borehole and/or of the outer contour of the sleeve (4), of the first measuring contact (55) and of the second measuring contact (57) is translated into a diagonal movement, expressed in terms of the inner diameter of the borehole and/or of the outer contour of the sleeve (4), of the first measuring component (51) relative to the second measuring component (52).

4. Measuring instrument (1) in accordance with any of the previous claims,
**characterised by the fact that**
the measuring contacts are arranged at the circumference of the sleeve (4).

5. Measuring instrument (1) in accordance with any of claims 1 to 4,
**characterised by** the fact that
the first bearing (61) and/or the second bearing (62) are configured as a first ball guide and/or a second ball guide.

6. Measuring instrument (1) in accordance with any of claims 1 to 5,
**characterised by** the fact that
the first bearing (61) and the second bearing (62) are arranged coaxially with each other.

7. Measuring instrument (1) in accordance with any of claims 1 to 6,
**characterised by the fact that**
the first bearing (61) and the second bearing (62) are configured such that the first measuring contact (55) is arranged so as to be linearly movable relative to the second measuring contact (57), and the first measuring contact (55) and the second measuring contact (57) are arranged so as to be linearly movable relative to the sleeve.

8. Measuring instrument (1) in accordance with any of the previous claims
**characterised by** the fact that
the first measuring component (51) comprises an inductivity and/or the second measuring component (52) comprises an element influencing the inductivity as a function of its relative position to the first measuring component (51).

## Revendications

1. Appareil de mesure (1) pour la mesure du diamètre intérieur d'un forage comprenant un manchon avec des contours extérieurs cylindriques au moins par sections, un premier contact de mesure (55) à appliquer à la paroi intérieure d'un forage, un second contact de mesure (57) à appliquer à la paroi intérieure du forage, un dispositif de mesure pour déterminer au moins une position relative et/ou une modification de position du premier contact de mesure (55) par rapport au second contact de mesure (57) et un boîtier (50),
le dispositif de mesure étant configuré comme un dispositif de mesure inductive, le dispositif de mesure comprenant au moins un premier composant de mesure (51) et un second composant de mesure (52) qui influence le premier composant de mesure (51) qui sont reliés au premier contact de mesure (55) ou au second contact de mesure (57) respectivement par un premier arbre de palier ou un second arbre de palier en étant mobiles l'un par rapport à l'autre, les arbres de palier étant configurés tels que le premier composant de mesure (51) et le second composant de mesure (52) sont mobiles parallèlement au premier contact de mesure (55) ou au second contact de mesure (57) et le premier contact de mesure (55), le second contact de mesure (57) et/ou le premier composant de mesure (51) et le second composant de mesure (52) étant placés mobiles linéairement, le premier arbre de palier étant mis à disposition en tant qu'arbre creux et le premier composant de mesure, le second composant de mesure, le premier arbre de palier et le second arbre de palier étant positionnés dans le boîtier (50),
**caractérisé en ce**
**que** l'appareil de mesure (1) présente un premier palier (61) dans lequel le premier contact de mesure (55) est positionné mobile par rapport au manchon (4) et présente un second palier (62) dans lequel le second contact de mesure (57) est positionné mobile par rapport au manchon (4), le premier palier (61) et/ou le second palier (62) étant configurés comme des paliers radiaux dans lesquels le premier contact de mesure (55) et/ou le second contact de mesure (57) sont positionnés mobiles l'un par rapport à l'autre et le premier palier (61) est placé entre le boîtier (50) et le premier arbre de palier configuré en tant qu'arbre creux et le second palier (62) est placé entre le premier arbre de palier et le second arbre de palier.

2. Appareil de mesure (1) selon la revendication 1,
**caractérisé en ce**
**que** les connexions sont configurées telles que le premier composant de mesure (51) et le second composant de mesure (52) sont mobiles de manière colinéaire avec le premier contact de mesure (55) et/ou le second contact de mesure (57).

3. Appareil de mesure (1) selon l'une des revendications précédentes,
**caractérisé en ce**
**que** les connexions sont configurées telles qu'un mouvement diagonal par rapport au diamètre intérieur du trou de forage ou des contours extérieurs du manchon (4), du premier contact de mesure (55) et du second contact de mesure (57) est transféré en un mouvement diagonal par rapport au diamètre intérieur du trou de forage ou des contours extérieurs du manchon (4), du premier composant de mesure (51) par rapport au second composant de mesure (52).

4. Appareil de mesure (1) selon l'une des revendications précédentes,
**caractérisé en ce**
**que** les contacts de mesure sont placés sur la circonférence du manchon.

5. Appareil de mesure (1) selon l'une des revendications 1 à 4,
**caractérisé en ce**
**que** le premier palier (61) et/ou le second palier (62) sont configurés comme un premier guidage à billes ou comme un second guidage à billes.

6. Appareil de mesure (1) selon l'une des revendications 1 à 5,
**caractérisé en ce**
**que** le premier palier (61) et/ou le second palier (62) sont placés coaxiaux l'un par rapport à l'autre.

7. Appareil de mesure (1) selon l'une des revendications 1 à 6,
**caractérisé en ce**
**que** le premier palier (61) et/ou le second palier (62) sont configurés tels que le premier contact de mesure (55) est mobile de manière linéaire par rapport au second contact de mesure (57) et que le premier contact de mesure (55) et le second contact de mesure (57) sont placés mobiles de manière linéaire par rapport au manchon.

8. Appareil de mesure (1) selon l'une des revendications précédentes,
**caractérisé en ce**
**que** le premier composant de mesure (51, 51') comprend une inductance et/ou le second composant de mesure (52, 52') comprend un élément qui influence l'inductance en fonction de sa position relative par rapport au premier composant de mesure (51, 51').
